Europäisches Patentamt

European Patent Office

Office européen des brevets

(19)

(11) EP 0 772 787 B1

(12) EUROPEAN PATENT SPECIFICATION

(45) Date of publication and mention
of the grant of the patent:
**06.10.1999 Bulletin 1999/40**

(51) Int Cl.6: **G01S 15/89**

(86) International application number:
**PCT/DK95/00315**

(21) Application number: **95925754.4**

(22) Date of filing: **21.07.1995**

(87) International publication number:
**WO 96/03662 (08.02.1996 Gazette 1996/07)**

(54) **A SYSTEM FOR UNDERWATER SURVEY OPERATIONS**

SYSTEM FÜR UNTERWASERVERMESSUNGSOPERATIONEN

SYSTEME POUR OPERATIONS D'ETUDE SOUS-MARINE

(84) Designated Contracting States:
**BE DE DK ES FR GB GR IT NL PT SE**

(30) Priority: **22.07.1994 DK 87194**

(43) Date of publication of application:
**14.05.1997 Bulletin 1997/20**

(73) Proprietor: **MARIDAN A/S**
**2970 Horsholm (DK)**

(72) Inventors:
• **BECH, Mogens**
**DK-3460 Birkerod (DK)**
• **BJERRUM, Anders**
**DK-2950 Vedbaek (DK)**
• **SHIPPEY, Geoffrey, Arthur**
**S-443 33 Lerum (SE)**

(74) Representative:
**Raffnsöe, Knud Rosenstand et al**
**Internationalt Patent-Bureau,**
**23 Höje Taastrup Boulevard**
**2630 Taastrup (DK)**

(56) References cited:
WO-A-93/01506          US-A- 4 244 036
US-A- 4 970 700        US-A- 5 025 423
US-A- 5 412 618

## Description

The present invention relates to the application of sonar imaging to underwater survey or exploration including sea-bed and ice-mapping, particularly in coastal areas down to a water depth of approximately 1500 m.

Traditionally environmental inspection of coastal water areas has in addition to measurements of various physical characteristics such as conductivity, temperature, pressure, turbidity, flouresence, oxygen and pH by measuring sensors suitable for the measurement of each such characteristic relied upon direct sea-bed observation by photographic methods such as video camera imaging. Several specially designed underwater vehicles including socalled tow-fishes as well as autonomous vehicles have been suggested for such surveying operations.

In the radar environment socalled synthetic aperture technology have been used successfully over the last few years to obtain higher resolution imaging, the main principle of such synthetic aperture systems being the integration of echo signals over a trajectory defining a synthetic aperture in response to signals emitted from an array having physical dimensions several times smaller than the synthetic aperture.

In two papers by J. Chatillon, M.E. Zacharia and M.E. Guié entitled "White band synthetic aperture sonar: Advantages and limitations" and "Self-focusing of synthetic aperture sonar: Validation for sea-data", respectively, presented to the first and second European conference on underwater acoustics in Luxembourg 1992 and Lyngby, Denmark 1994, the application of synthetic aperture systems to underwater survey has been suggested. The main problem to be encountered by this application is the requirement of an extremely accurate description of the trajectory used to define the synthetic aperture within a margin of a fraction only of the wavelength of the ultra sound emission used in the sonar system, said wavelength being typically of the order of 2 cm corresponding to a frequency of 75 kHz.

Due to the evident impossibility to have this requirement fulfilled by using a surface vessel as a carrier for the physical sonar array it has been suggested in the above-mentioned papers to use a socalled tow-fish, i.e. an underwater vehicle towed by a surface vessel and propagating at such a water depth that measurements can be regarded not to be disturbed by surface waves. Even by this method it has appeared, however, to be impossible to obtain sufficient accuracy due to the fact that movements of the surface vessel may be transferred to the tow-fish through the hawser connecting the latter to the former.

It is the object of the invention to provide an underwater survey system by which the shortcomings of prior art suggestions have been remedied by using as a carrier for the sonar equipment a submarine vehicle having a controlled manoeuvrability meeting the requirements of accuracy out-lined above.

According to the invention, there is provided a system for underwater survey operations such as sea-bed or ice-mapping by use of sonar imaging, comprising an autonomous unmanned submarine vehicle having a low-drag hull, propulsion means comprising cruising and hovering thrusters, vehicle steering means, a navigation system comprising motion sensing and positioning means and an adaptive autopilot system for precisely controlling said propulsion and vehicle steering means to propagate said vehicle through a predetermined substantially rectilinear submarine trajectory, a sonar system including an array of sonar transmission and receiving elements, said array being arranged on a surface part of said vehicle to capture echo-signals generated in response to emission of sonar signals during propagation of the vehicle through a part of said trajectory, said autopilot system being controlled to register any deviation of the propagation of the vehicle from said trajectory and provide a correspondingly corrected description of the predetermined trajectory, memory means on said vehicle for storing sets of captured echo signal values and signal processing means for processing said stored sets of echo signal values and generating higher resolution image information data corresponding thereto.

By equipping an autonomous submarine vehicle of the kind defined with an adaptive autopilot system the manouvering accuracy of the vehicle can be raised to a level at which the demands for meaningful use of the vehicle as a carrier for a sonar system can be complied with, due to the fact that the propagation of the vehicle along the predetermined and described trajectory is, on one hand, controlled by the autopilot system with a high accuracy and, on the other hand, any deviation of the vehicle from the described trajectory for the sonar system is registered by the adaptive autopilot system which in response provides a corresponding correction of the description of the trajectory.

The autonomous submarine vehicle is controlled to operate unmanned and without any physical connection to the water surface at a water depth at which the influence of surface waves on vehicle motion can generally be neglected, so that sway and heave movements can be assumed to be caused by operation of the vehicle's own 5 steering members, in particular rudder operation, only. Thereby, the sway and heave movements can be described directly as functions of the actually performed rudder deflections. However, by comparing the sway and heave movements described in this way with actually observed sway and pitch movement additional information may even be obtained about submarine water movements which may influence the integration of echo-signals over the synthetic aperture such as underwater current and interface layers between warm and cold water.

In itself, the low drag coefficient of the vehicle results in very smooth propagation at nearly constant velocity with a significant reduction of propagation losses, so that velocity fluctuations induced by the steering means can be disregarded and the velocity of the vehicle can be described directly from the rpm value of the propellers.

In one preferred embodiment of the survey system said sonar system (42) comprises a synthetic aperture system with a length of said array defining a limited physical aperture, the part of said trajectory used for capture of said echo-signals defining a synthetic aperture of a length several times greater than said physical aperture, said autopilot system (41) being controlled to provide said corrected description of the predetermined trajectory within a margin of a fraction of the wavelength of said sonar signals.

Thereby, it has become possible to take full advantage of the benefits of using a synthetic aperture sonar system for underwater survey while avoiding the problems inherent in the prior art suggestions of tow-fish installations of such systems, and sea-bed and ice mapping can be performed with a significantly higher resolution than by any known underwater survey systems. The updated correction of the description of the trajectory obtained from the autopilot system provides high accuracy correlation of the synthetic aperture definition to the collected set of echo-signal values within a margin of a fraction, typically 25 %, of the wavelength of the ultrasound signals used in the sonar system.

Depending on characteristics of the actual mission the sonar system may be structured for direct scan with a vertical axis or, to increase the width of the surveying zone, for single or dual side-scan whereby depending on the vertical distance of the vehicle from the sea-bed mapping can be performed of a surveying zone of a width up to 200 meters for each trajectory.

The signal processing means for the echo signals collected by the sonar system may theoretically be located on board the vehicle, but due to the limited space available and to avoid distortion resulting from data communication of imaging information from the vehicle it is preferred that the signal processing means are arranged at a location different from said vehicle, such as a mother surface vessel or a land-based installation, and include reading means for reading out said sets of echo signal values from said memory means.

In a preferred embodiment of the system according to the invention the hull of the submarine vehicle is of a general flat-fish configuration with a bow section including a generally ellipsoid shaped front wall, a centre section having a substantially flat bottom and a stern section of a rearwardly tapering wedge shape.

The development of a prototype vehicle of this architecture has been described in two paper by A. Pascoal et al "MARIUS (Marine Utility System): An autonomous underwater vehicle for environmental surveys" and "Development of a self-organizing underwater vehicle", both published in Proceedings of the Mast Days and Euromar Market, Commission of the European Commun ities, Brussels, March 1993. The general object of this development has been to provide a vehicle useful for the collection of sea-bed samples and environmental data in designated regions in the surrounding coastal shelf. According to the description given in the two above-mentioned papers the vehicle has been controlled to travel, guided by a mission programme, from one stationary site to another for sample collection and environmental measurements.

According to a further development of the invention a pipeline tracking system may be provived by arranging pipe line tracking means to extend forwardly from the vehicle. Such pipeline tracking means may comprise electromagnetic search coil means arranged to extend in a substantially horizontal plane in front of the bow section. The search coil means may be electrically connected with the mavigation system of the vehicle.

In the following the invention will be described in further detail with reference to the accompanying drawings, on which

figs. 1-3 show an embodiment of an autonomous submarine vehicle;
fig. 4 is a schematical bloc diagram of the vehicle's computer and autopilot systems;
fig. 5 illustrates the registration by the autopilot system of a deviation of vehicle propagation from a predetermined trajectory;
figs. 6-9 illustrate examples of surveying operations using the synthetic aperture sonar system of the invention;
fig. 10 is a schematical bloc diagram of main components of the sonar system and the signal processing means; and
figs. 11 to 13 show an embodiment of the autonomous submarine vehicle particularly designed for tracking of a buried pipeline.

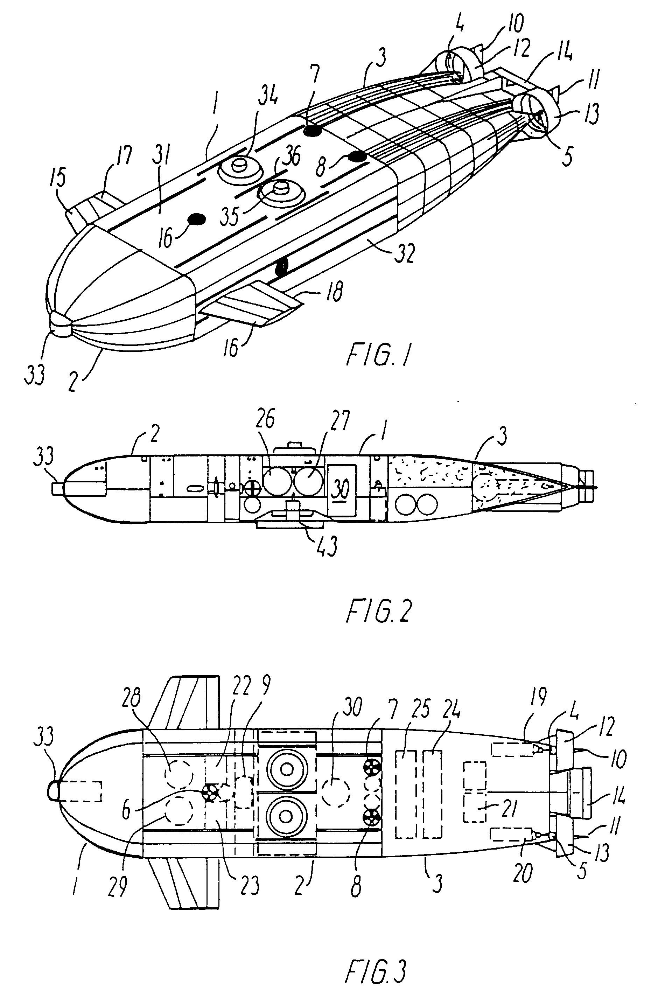

Figs. 1 to 3 show in a perspective view and vertical and horizontal sectional views an autonomous, unmanned submarine vehicle of the kind described in the above-mentioned publications.

The hull of the vehicle has a general flat-fish configuration and is composed of a center section 1 of a flat rectangular cross-sectional shape and bow and stern sections 2 and 3, respectively, designed to give the hull a very low drag coefficient. The bow section 2 may thus provide a general ellipsoid shaped front wall, whereas the stern section 3 may have a rearwardly tapering wedge shape which also serves to provide a sufficient flow of water to two main propellers 4 and 5 arranged at the rear end of the stern section to serve as cruising thrusters.

In addition to main propellers 4 and 5 the propulsion means of the vehicle comprise three vertical thrusters 6-8 and a horizontal side thruster 9 arranged in the center section 1 for hovering operations. The steering means of the vehicle comprise rudders 10 an 11 arranged behind the main propellers 4 and 5, which for purposes of protection and increased thrust are arranged in nozzles 12 and 13, as well as an elevator 14 arranged at the rear end of the stern section 3 between main propellers 4 and 5, and fixed wings 15 and 16 with ailerons 17 and 18 projecting laterally from the front end of the center section 1. The rudders, the elevator and the ailerons are operated by servo actuators 19-23 arranged in the stern section 3 and the forward end of the center section 1, respectively.

The stern section 3 moreover contains a buoyancy tank 24 and an air pressure tank 25 forming parts of an emergeny air lift recovery system.

The center section 1 accommodates the electronic system of the vehicle as will be further explained in the following and batteries for supplying power to the thruster motors and the actuators for the steering means. In order to provide protection at the maximum water depth for operation of the vehicle, which will typically be 600 m, the individual systems of the electronic equipment and the batteries may be arranged in pressure resistant stainless steel tubes 26-30, and the center section 1 may as a whole be made as a welded stainless steel structure comprising e.g. two longitudinal and five transverse bulkheads held together by two decks 31 and 32 forming together the outer wall of section 1.

The bow section 2 may typically be used for accommodation of various underwater survey utensils including sensors and instruments for measuring various physical characteristics and video and still cameras. At the very front tip of the bow section an obstacle detection sonar system may 33 be arranged.

In order to reduce weight while maintaining a structure of sufficient stiffness the bow and stern sections 2 and 3 may be made of a fibreglass reinforced plastic and connected with the center section 1 by bolts.

In the embodiment shown the vehicle is arranged for acoustical communication with an external station such as a mother surface vessel by means of an acoustic transducer 34 and a baffler 35 attached to the top part of the center section 1 at which also a transducer array 36, which forms part of a long baseline positioning system, may be arranged.

The overall dimensions of the vehicle may be 4.5 m long, 1.1 m wide and 0.6 m high whereas, due to the use of light weight materials, the dry weight of the vehicle may be kept as low as 1400 kg.

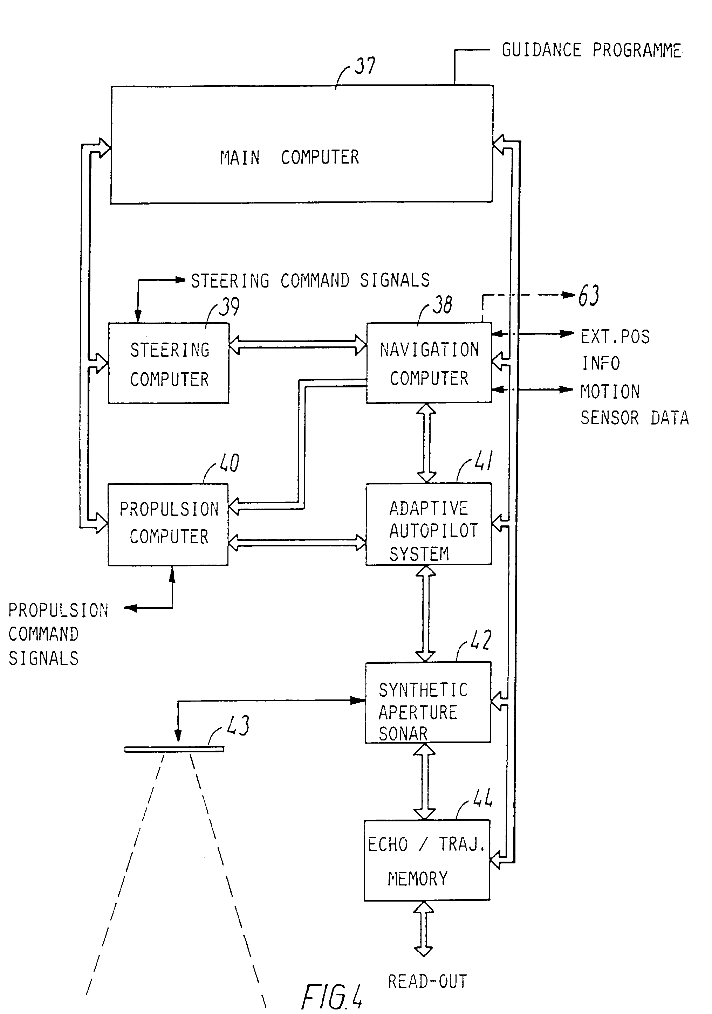

The main components of the vehicle's electronic equipment are shown in the simplified bloc diagram in fig. 4.

A main computer 37 is generally responsible for coordination and supervision of all activities of the vehicle and management of network links connecting the various other systems of the electronic equipment. It may include means for storing and executing a vehicle guidance programme containing the data necessary for routing the vehicle through a predetermined travel path defined by an operation plan inputted to the main computer via appropriate interface means.

It may further include a vehicle support system controlling the distribution of energy to the remaining systems of the vehicle and monitoring energy consumption, as well as an emergency system forcing the vehicle to surface in case of an emergency situation.

Controlled by the main computer 37 a navigation computer 38 is responsible for macro navigation of the vehicle by providing accurate estimates of the linear position and attitude of the vehicle as well as corresponding cruising speeds. It merges external position information inputted from the transducer array 36, which information may be obtained by interrogation of a number of stationary transponder stations located within the communication range of the transducer array 36, with data obtained from a motion sensor system on board the vehicle. The latter system may include a combination of pendulums, accelerometers , rate gyros, a gyrocompass, a depth cell, an echosounder and a paddle wheel.

Output data from the navigation computer 38 are supplied to a steering computer 39 and a propulsion computer 40 for the generation of command signals for the vehicle's steering and propulsion means as explained in the foregoing and are also sent back to the main computer for performance assessment.

For the performance of synthetic aperture sonar operations an adaptive autopilot system 41 is linked with the main computer 37 and the navigation computer 38.

On the basis of an initial description of each trajectory to be subjected to synthetic aperture sonar survey, which description may be part of the guidance programme inputted to the main computer 37, the adaptive autopilot system 41 generates for each trajectory which should serve to define the synthetic aperture for the sonar survey an initial exact model description.

In case of a deviation from the initial model description of the predetermined actual trajectory, which deviation may, as mentioned in the foregoing, in general be assumed to be caused by operation of the vehicle's own steering members, the adaptive autopilot system 41 receives from the steering and propulsion computers 39 and 40, either as shown via the navigation computer 38 or directly, the available data on actual cruising speed and deflection of steering members, in particular the rudders, on the basis of which the autopilot system 41 computes a deviation correction factor which is used to adapt or update the model description to the actual propagation of the vehicle.

The performance of the sonar survey is controlled by the synthetic aperture sonar system 42 linked with the adaptive autopilot system 41 and controlling the emision of pulsed sonar signals which may have an ultra sound frequency of typically 75 kHz corresponding to a wavelenght 2 cm, by means of a transmitter/receiver array 43 which may typically have a lenght of 0,5 meter and may as shown in fig. 2 be arranged at the bottom deck 32 of the vehicle. Pulsed trains of sonar signals are transmitted by array 43 at a repetition rate matching the cruising speed of the vehicle which is typically 1-2 m/s, said pulsed trains normally having a duration adjusted to secure capture of echo-signals from one pulse train before transmission of the next.

The echo-signals are received by array 43 and supplied to sonar unit 42 in which they are real time correlated with the actual trajectory information obtained from the autopilot system 41 before being entered as raw information data in an echo/trajectory memory 44.

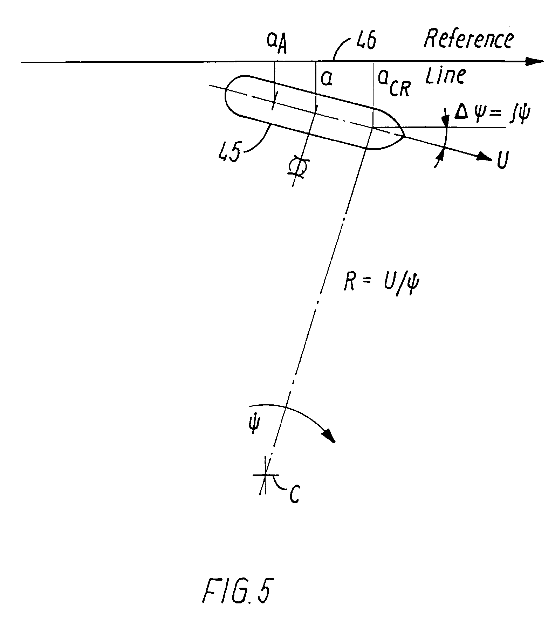

Figure 5 illustrates schematically the computation performed by the adaptive autopilot system 41 of the correction factor used to adapt or update the model description of the trajectory in case of a deviation from the initial model description.

The vehicle 45 is cruising at a speed U along a course deviating from the model description of the trajectory which is represented by a reference line 46. Assuming the deviation to be caused by a rudder deflection of an angle $\phi$ corresponding to a theoretical movement of the vehicle 45 along a circle having its center in a point C and a radius $R=U/\phi$ the correction factor $a_{CR}$ in terms of the actual distance of a specification point on the vehicle 45 from the reference line 46 will be

$$a_{CR}=U\sin\Delta\phi,$$

where $\Delta\phi= \int\Psi$ which may be used to adapt the model description to the actual propagation of the vehicle.

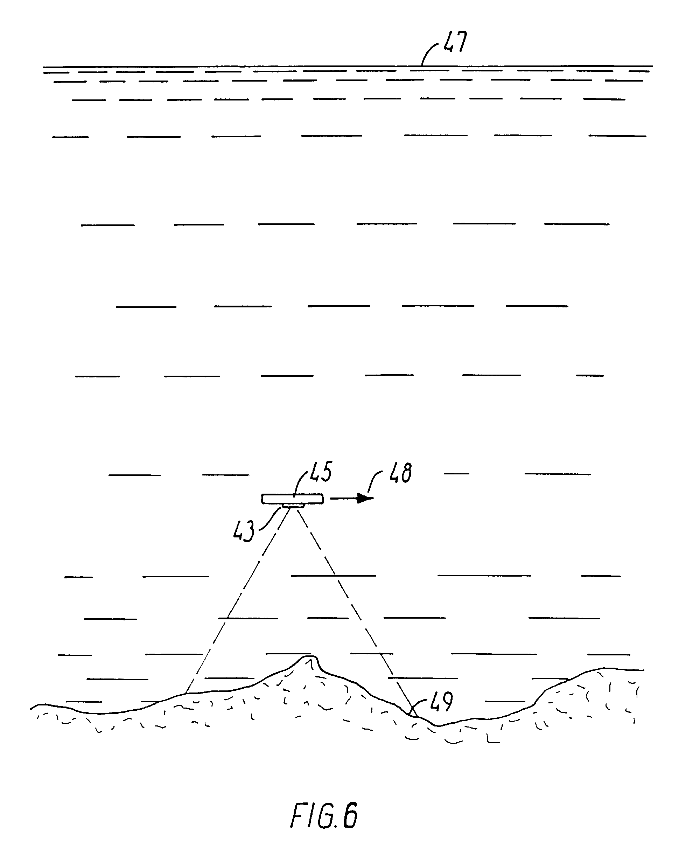

Figures 6 to 9 show various examples of synthetic aperture sonar survey in submarine environment by means of a system according to the invention.

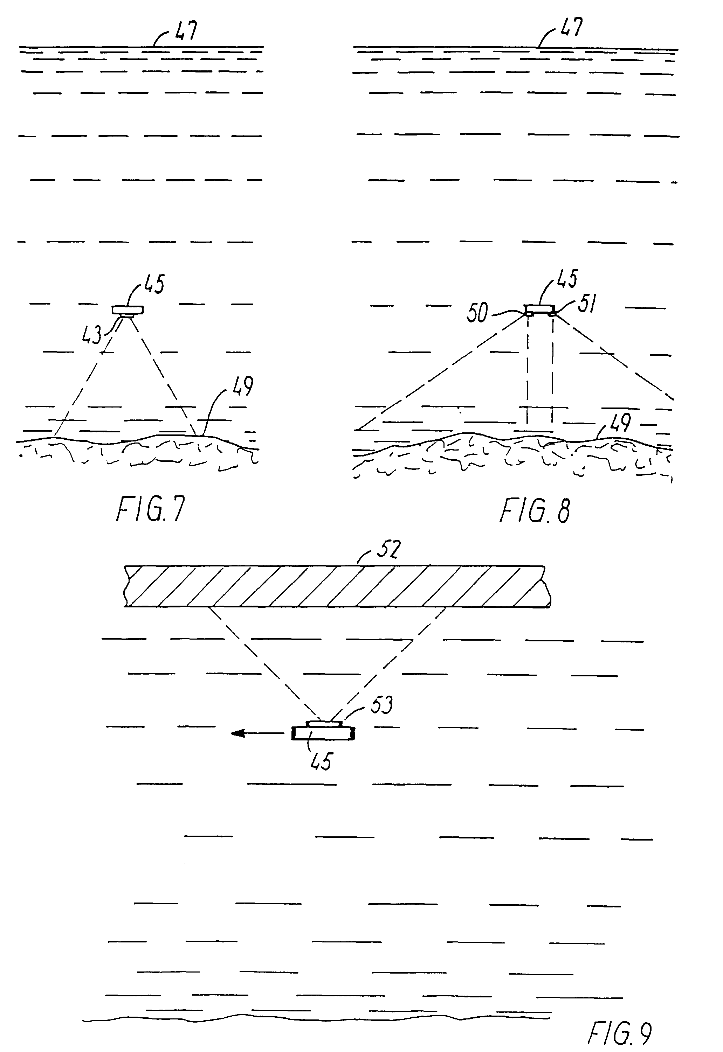

I figure 6 and 7 the vehicle 45 is cruising horizontally at a considerable water depth below the sea surface 47 in the direction shown by the arrow 48. Sonar signal are transmitted from the array 43 arranged in the longitudinal center line on the bottom deck of the vehicle 45 against the sea-bed 49 and echo-signals are received by the array 43 and processed and correlated with trajectory information as described in the foregoing.

While figures 6 and 7 show vertical scan by means of a single array arranged in the longitudinal center line, figure 8 illustrates a survey operation in which use are made of two arrays 50 and 51 arranged in parallel relationship along opposed longitudinal side edges of the bottom of the vehicle 45 to provide a dual side scan survey whereby the width of the survey zone will be substantially increased.

In addition to the primary intended use for sea-bed mapping an interesting application of the system according to the invention for exploring ice formations is illustrated in figure 9 in which the surface is covered by an ice layer 52, whereas the transmitter/receiver array 53 for transmission of sonar signals and collection of echo-signals is arranged at the top deck of the vehicle 45.

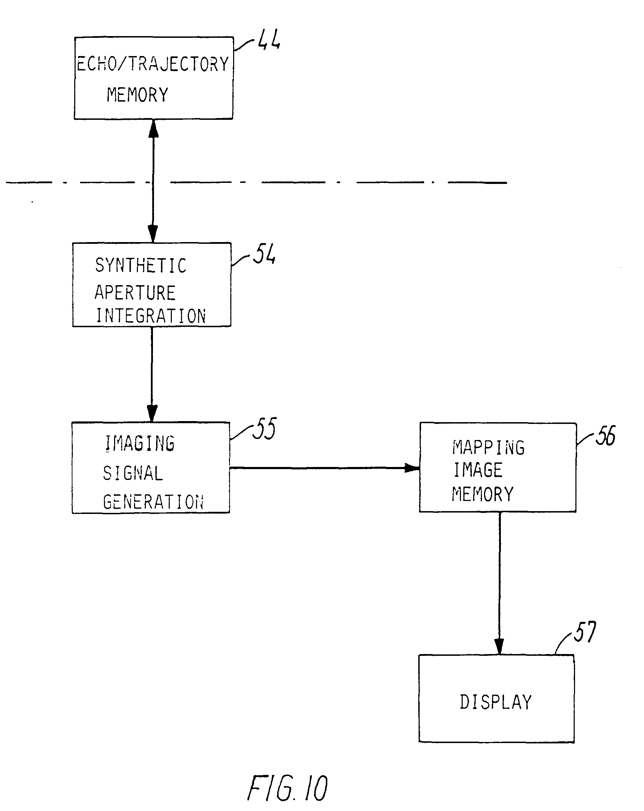

The simplified block diagram in figure 10 illustrates the processing of the raw data information obtained from the echo signals after real time correlation with trajectory information obtained from the adapted model description in the autopilot system 41 and stored in the echo/trajectory memory 44.

For the reasons mentioned in the foregoing the signal processing system is preferably arranged at a location different from the vehicle, e.g. at a mother surface vessel or at a land-based installation.

After termination of a surveying operation the vehicle is recovered from the sea and the raw data information is read out from the memory 44 to the signal processing system main components of which comprise an integrating unit 54 performing an integration of the raw data information associated with each synthetic aperture, whereafter imaging signals are generated in an imaging signal generator 55 and stored in a mapping image memory 56 from which actual imaging information may be read out to a display unit 57 or to a printing facility.

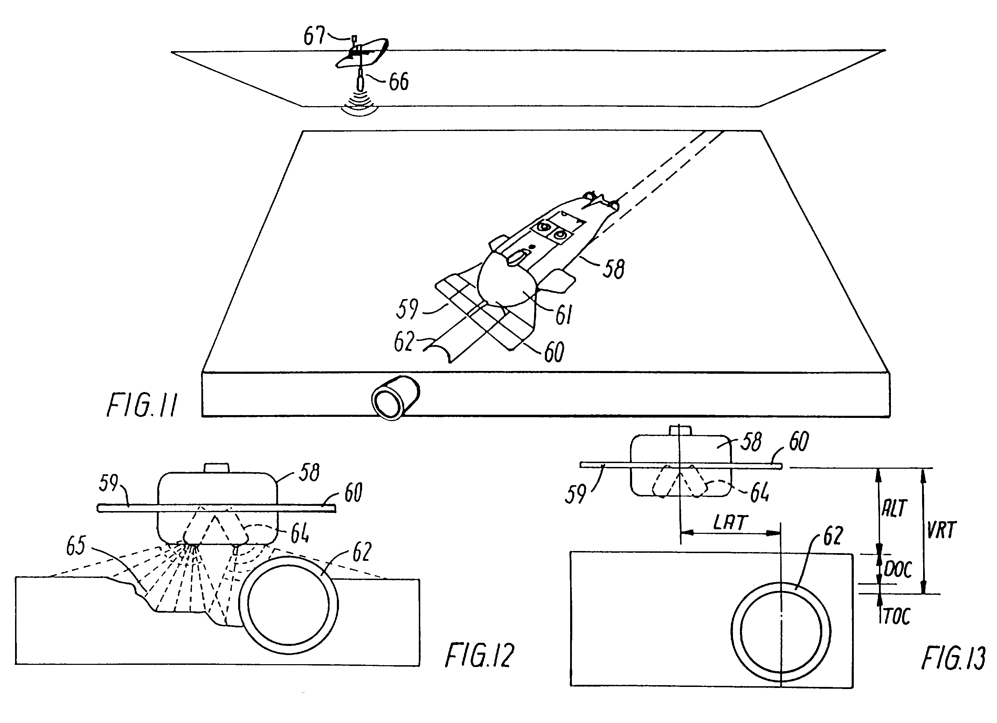

As further illustrated in figs. 11 to 13 the system according to the invention may also adventageously be used for tracking and surveying of pipelines buried under the sea-bed at a depth typically between 0.6 and 1 meter.

For this application the vehicle 58 is provided with pipeline tracking means which, in the illustrated embodiment, comprises two electromagnetic search coils 59 and 60 arranged in front of the bow section 61 of vehicle 58 to extend side by side in a horizontal plane and symmetrical with respect to a vertical symmetry plane of the vehicle.

The search coils 59 and 60 which may be of the type TSS 340 supplied by TSS (U.K.) Ltd. are operated to use pulse induction technology to detect a conductive target. Around each coil a changing magnetic field is generated by driving the coil with a maximum current of 20 A for a pulse duration of 1500 µs. In response, eddy currents are created in the conductive parts of the target such as a pipeline section 62, whereby a voltage is induced back into the search coils which will effect the rate of decay of a back EMF voltage created in the coil on termination of the original 20 A drive pulse. The rate of decay is related to the conductivity, size and proximity of the pipeline section 62.

The decaying voltage in each coil is measured to determine two individual signal voltages which as shown by a dashed line 63 in fig. 3 are supplied to the navigation computer 38 where the relationship between the voltages is analyzed to determine the position of the pipeline relative to the coils. The navigation computer is in this context programmed to give priority to signals inputted from the search coils.

Simultaneously a side scanning sonar system using arrays 64 is used to examine the sea-bed surroundings of the pipeline, e.g. to inspect a possible scouring zone 65 as shown in fig. 12.

Performance tests have demonstrated that by means of the tracking equipment illustrated the vehicle will be able to follow the pipeline accurately in the horizontal plane by propagating slightly above the sea-bed for a burial depth up to about 1 meter. If the burial depth increases the tracking system comprising coils 59 and 60 will become inoperative and navigation control is taken over by the adaptive autopilot system as explained in the foregoing.

As illustrated in fig. 13 the basic data obtained by the pipeline tracking comprise the vertical distance VRT from the coil array to the target and the lateral offset LAT, whereas the distance ALT from the coil array 59, 60 to the sea-bed may be determined by an echosounder altimeter. The burial depth DOC may then be obtained by subtraction of ALT from VRT and compensation for the thickness TOC of the concrete jacket around the steel pipeline 62.

The measurement data obtained by the pipeline inspection may as shown in fig. 11 be transferred, e.g. by acoustical transmission to an underwater communication station 66 connected to a satellite transmission buoy 67.

Compared to the prior art use of a remotely controlled vehicle or a towfish the invention offers the considerable advantage of ability of operation independently of a surface vessel and without any restriction as to the operational depth. The vehicle of the invention may thus be located onboard an oil drilling platform from which it may be launched on to the sea-bed by means of a special garage or cage lowered from the platform.

## Claims

1. A system for underwater survey operations such as sea-bed or ice-mapping by use of synthetic aperture sonar imaging, comprising an autonomous unmanned submarine vehicle having a low-drag hull, propulsion means comprising cruising and hovering thrusters (4-8), vehicle steering means (10, 11), a navigation system (38) comprising motion sensing and positioning means and an adaptive autopilot system (41) for precisely controlling said propulsion and vehicle steering means to propagate said vehicle through a predetermined substantially rectilinear submarine trajectory, a sonar system (42) including an array (43) of sonar transmission and receiving elements, said array being arranged on a surface part (32) of said vehicle to capture echo-signals generated in response to emission of sonar signals during propagation of the vehicle through a part of said trajectory, said autopilot system (41) being controlled to register any deviation of the propagation of the vehicle from said trajectory and provide a correspondingly corrected description of the predetermined trajectory, memory means (44) on said vehicle for storing sets of captured echo signal values and signal processing means (54-57) for processing said stored sets of echo signal values and generating higher resolution image information data corresponding thereto.

2. A system as claimed in claim 1 wherein said sonar system (42) comprises a synthetic aperture system with a length of said array defining a limited physical aperture, the part of said trajectory used for capture of said echo-signals defining a synthetic aperture of a length several times greater than said physical aperture, said autopilot system (41) being controlled to provide said corrected description of the predetermined trajectory within a margin of a fraction of the wavelength of said sonar signals.

3. A system as claimed in claim 1 or 2, wherein said signal processing means (54-57) are arranged at a location different from said vehicle and include reading means for reading out said sets of echo signal values from said memory means (44).

4. A system as claimed in claim 1, 2 or 3, wherein said hull is of a general flat-fish configuration with a bow section (2) including a generally ellipsoid shaped front wall, a centre section (1) having a substantially flat bottom (32) and a stern section (3) of a rearwardly tapering wedge shape.

5. A system as claimed in claim 4, wherein said sonar system (42) comprises a single array (43) of sonar transmission and receiving elements.

6. A system as claimed in claim 5, herein said array (43) is arranged to extend approximately in the vertical longitudinal centre plane of said vehicle.

7. A system as claimed in claim 6, wherein said array (43) is arranged on the bottom (32) of said centre section (1).

8. A system as claimed in claim 6, wherein said array is arranged on a top surface of said centre section.

9. A system as claimed in claim 5, wherein said array (50, 51) is arranged to extend along a longitudinal side edge of the bottom of the center section (1) to provide side-scan sonar signals.

10. A system as claimed in claim 4, wherein said sonar system includes two arrays (50, 51) of sonar transmission and receiving elements arranged in parallel relationship along opposed longitudinal side edges of the bottom of the centre section (1).

11. A system as claimed in any of claims 4 to 10, wherein pipeline tracking means are provided to extend forwardly of said vehicle (58).

**12.** A system as claimed in claim 11, wherein said pipeline tracking means comprises electromagnetic search coil means (59, 60) arranged to extend in a substantially horizontal plane in front of said bow section (61).

**13.** A system as claimed in claim 12, wherein said search coil means comprises two electromagnetic search coils (59, 60) arranged in symmetrical side by side relationship with respect to a vertical longitudinal symmetry plane of said vehicle (58).

**14.** A system as claimed in claim 12, wherein said search coil means (59, 60) is electrically connected with said navigation system (38).

**15.** A system as claimed in claim 14, wherein said navigation system (38) comprises computing means programmed to give priority to signals inputted from said search coil means(59, 60).

**Patentansprüche**

**1.** System für Unterwasservermessungsoperationen wie zum Beispiel Meeresboden- und Eiskartographie mittels Sonarbilddarstellung mit synthetischer Apertur, umfassend ein selbststeuerndes, unbemanntes Unterseefahrzeug mit einem aerodynamisch günstigen Rumpf, Kreuz- und Schwebepropeller (4-8) umfassende Antriebsmittel, Steuerungsgeräte (10, 11), ein Navigationssystem (38) mit Bewegungssensoren und Positionsfeststellern sowie einem anpassungsfähigen Autopilotsystem (41) zur genauen Kontrolle erwähnter Antriebsmittel und Steuerungsgeräte, um erwähntes Fahrzeug durch eine vorausbestimmte im wesentlichen geradlinige unterseeische Bahn anzutreiben, ein Sonarsystem (42) umfassend eine Serie (43) von Sonarübertragungs- und -empfangselementen, wobei erwähnte Serie zum Einfang von in Antwort auf die Aussendung von Sonarsignalen während Antriebes des Fahrzeuges durch einen Teil erwähnter Bahn hervorgebrachten Echosignalen auf einer Oberflächenpartie (32) erwähntes Fahrzeugs angebracht ist, und wobei erwähntes Autopilotsystem (41) zur Eintragung jeder Abweichung des Antriebs des Fahrzeugs von erwähnter Bahn und zur Sendung einer dementsprechend korrigierten Beschreibung der vorausbestimmten Bahn betätigt ist, auf erwähntem Fahrzeug angebrachte Speichermittel (44) zur Speicherung des Wertbereiches empfangener Echosignale und Signalbearbeitungsmittel (54-57) zur Bearbeitung erwähnter gespeicherten Wertbereich von Echosignalen und zur Erzeugung dementsprechender Daten über Bildauskünfte höher Auflösung.

**2.** System nach Anspruch 1, worin erwähntes Sonarsystem (42) ein synthetisches Apertursystem mit einer Länge erwähnter eine physische Apertur begrenzender Serie umfasst, wobei der zum Empfang erwähnten Echosignale benutzte Teil erwähnter Bahn eine synthetische Apertur von einer als erwähnte physische Apertur mehrmals grössere Länge definiert, und wobei erwähntes Autopilotsystem (41) zur Sendung erwähnter korrigierten Beschreibung der vorausbestimmten Bahn innerhalb eines Spielraums einer Fraktion der Wellenlänge erwähnter Sonarsignale betätigt ist.

**3.** System nach Anspruch 1 oder 2, worin erwähnte Signalbearbeitungsmittel (54-57) an einer anderen Stelle als erwähntem Fahrzeug angebracht sind und Lesemittel zur Auslesung erwähnten Wertbereiches der Echosignale aus erwähnten Speichermitteln (44) umfassen.

**4.** System nach Anspruch 1, 2 oder 3, worin erwähnter Rumpf im allgemeinen eine Plattfischgestalt mit einem eine im allgemeinen ellipsenförmige Vorderwand umfassenden Bugabschnitt (2), einem Mittelstück (1) mit einem im wesentlichen flachen Boden (32) und einen sich rückwärts verengenden keilförmigen Achterabschnitt (3) aufweist.

**5.** System nach Anspruch 4, worin erwähntes Sonarsystem (42) eine einzige Serie (43) von Sonartransmissions- und Empfangelementen umfasst.

**6.** System nach Anspruch 5, worin erwähnte Serie (43) sich annähernd in der senkrechten, längs verlaufende Mittelebene erwähnten Fahrzeuges erstreckt.

**7.** System nach Anspruch 6, worin erwähnte Serie (43) auf dem Boden (32) erwähnten Mittelstücks (1) angeordnet ist.

**8.** System nach Anspruch 6, worin erwähnte Serie auf einer Oberfläche erwähnten Mittelstücks (1) angeordnet ist.

**9.** System nach Anspruch 5, worin erwähnte Serie (50, 51) sich entlang einer längs verlaufende Seitenkannte des Bodens der Mittelebene (1) erstreckt, um seitwärts abtastenden Sonarsignale auszusenden.

**10.** System nach Anspruch 4, worin erwähntes Sonarsystem zwei Serien (50, 51) von Sonarübertragungs- und Empfangelementen umfasst, die entlang gegenüberliegenden längs verlaufenden Seitenkannten des Bodens des Mittelstücks (1) zueinander parallel angeordnet sind.

**11.** System nach einem der Ansprüche 4 bis 10, worin Mittel zum Aufspüren von Rohrleitungen vorgesehen sind und sich vor erwähntem Fahrzeug (58) erstrecken.

**12.** System nach Anspruch 11, worin erwähnte Mittel zum Aufspüren von Rohrleitungen elektromagnetische Suchspulen (59, 60) umfassen, die sich in einer im wesentlichen waagerechten Ebene vor erwähntem Bugabschnitt (61) erstrecken.

**13.** System nach Anspruch 12, worin erwähnte Suchspulen zwei im Verhältnis zu einer senkrechten und längs verlaufenden Symmetrieebene erwähnten Fahrzeuges (58) symmetrisch nebeneinander angeordnete elektromagnetische Suchentwicklungen (59, 60) aufweisen.

**14.** System nach Anspruch 12, worin erwähnte Suchspulen (59, 60) mit erwähntem Navigationssystem (38) elektrisch verbunden sind.

**15.** System nach Anspruch 14, worin erwähntes Navigationssystem (38) Berechnungselemente umfasst, die dafür programmiert sind, von erwähnten Suchspulen (59, 60) eingegebene Signale vordringlich zu bearbeiten.

## Revendications

**1.** Système pour opérations d'étude sous-marine comme par exemple cartographie du fond marin ou glaciologique par utilisation d'imagerie sonar à ouverture synthétique, comportant un véhicule sous-marin autonome non habité, à coque à faible traînée, des moyens de propulsion comprenant des propulseurs (4-8) de croisière et de maintien en position, des moyens (10, 11) de pilotage, un système de navigation (38) comportant des moyens de détection de mouvement et de positionnement, et un système autopilote adaptif (41) pour commande précise desdits moyens de propulsion et de pilotage du véhicule selon une trajectoire sous-marine prédéterminée, essentiellement rectiligne, un système sonar (42) comprenant un réseau d'éléments d'émission et de réception sonar (43), ledit réseau étant disposé sur une portion de surface (32) dudit véhicule pour capturer des signaux d'écho produits en réponse à l'émission de signaux sonar durant le déplacement du véhicule sur une partie de ladite trajectoire, ledit système autopilote (41) étant commandé pour enregistrer toute déviation du déplacement du véhicule par rapport à ladite trajectoire et pour donner une description corrigée de façon correspondante de la trajectoire prédéterminée, des moyens de mémoire (44) situés sur ledit véhicule, pour mise en mémoire de jeux de valeurs de signal d'écho capturé, et des moyens (54-57) de traitement desdits jeux de valeurs de signal d'écho capturé mises en mémoire et de production de données correspondantes d'information d'image à résolution accrue.

**2.** Système selon la revendication 1, dans lequel ledit système sonar (42) comporte un système à ouverture synthétique avec une longueur dudit réseau définissant une ouverture physique limitée, la partie de ladite trajectoire utilisée pour la capture desdits signaux d'écho définissant une ouverture synthétique d'une longueur plusieurs fois supérieure à celle de ladite ouverture physique, ledit système autopilote (41) étant commmandé pour fournir ladite description corrigée de de la trajectoire prédéterminée dans une marge d'une fraction de la longueur d'onde desdits signaux sonar.

**3.** Système selon les revendications 1 ou 2, dans lequel lesdits moyens de traitement (54-57) sont disposés en un emplacement différent dudit véhicule et comportent des moyens de lecture desdits jeux de valeurs de signal d'écho dans lesdits moyens de mémoire (44).

**4.** Système selon les revendications 1, 2 ou 3, dans lequel ladite coque a la forme générale d'un poisson plat avec une section de proue (2) comportant une paroi frontale présentant la forme générale d'un ellipsoïde, une section centrale (1) à fond essentiellement plat et une section de poupe (3) en forme de coin se rétrécissant vers l'arrière.

**5.** Système selon la revendication 4, dans lequel ledit système sonar (42) comporte un réseau unique (43) d'éléments d'émission et réception sonar.

**6.** Système selon la revendication 5, dans lequel ledit réseau (43) est disposé pour s'étendre approximativement dans le plan médian vertical et longitudinal dudit véhicule.

**7.** Système selon la revendication 6, dans lequel ledit réseau (43) est disposé sur le fond (32) de ladite section centrale (1).

**8.** Système selon la revendication 6, dans lequel ledit réseau est disposé sur une surface supérieure de ladite section centrale.

**9.** Système selon la revendication 5, dans lequel ledit réseau (50, 51) est disposé pour s'étendre le long d'un bord latéral longitudinal du fond de la section centrale (1) pour délivrer des signaux sonar en balayage latéral.

**10.** Système selon la revendication 4, dans lequel ledit système sonar comporte deux réseaux (50, 51) d'éléments d'émission et réception sonar, disposés en parallèle le long de bords latéraux longitudinaux opposés du fond de la section centrale (1).

11. Système selon l'une quelconque des revendications 4 à 10, dans lequel des moyens (58) de surveillance de pipeline sont prévus pour s'étendre devant ledit véhicule.

12. Système selon la revendication 11, dans lequel lesdits moyens de surveillance de pipeline comprennent des enroulements de recherche (59, 60) disposés pour s'étendre dans un plan substantiellement horizontal devant ladite section de proue (61).

13. Système selon la revendication 12, dans lequel lesdits enroulements de recherche comportent deux bobines de recherche électromagnétique (59, 60) disposées côte à côte, symétriquement par rapport à un plan vertical longitudinal de symétrie dudit véhicule (58).

14. Système selon la revendication 12, dans lequel lesdits enroulements de recherche (59, 60) sont électriquement reliés audit système de navigation (38).

15. Système selon la revendication 14, dans lequel ledit système de navigation (38) comporte des moyens de calcul programmés pour donner priorité aux signaux introduits depuis lesdits enroulements de recherche (59, 60).

FIG. 1

FIG. 2

FIG. 3

GUIDANCE PROGRAMME

*37*

MAIN COMPUTER

STEERING COMMAND SIGNALS

→ *63*

*39*

STEERING COMPUTER

*38*

NAVIGATION COMPUTER

EXT.POS INFO

MOTION SENSOR DATA

*40*

PROPULSION COMPUTER

*41*

ADAPTIVE AUTOPILOT SYSTEM

PROPULSION COMMAND SIGNALS

*43*

*42*

SYNTHETIC APERTURE SONAR

*44*

ECHO / TRAJ. MEMORY

READ-OUT

*FIG.4*

FIG.5

FIG. 6

FIG.7

FIG.8

FIG.9

FIG. 10

FIG.11

FIG.12

FIG.13